(19) Europäisches Patentamt
European Patent Office
Office européen des brevets

(11) **EP 1 390 615 B1**

(12) **EUROPEAN PATENT SPECIFICATION**

(45) Date of publication and mention
of the grant of the patent:
**30.04.2008 Bulletin 2008/18**

(51) Int Cl.:
**F03D 1/02** *(2006.01)*   **F03D 11/00** *(2006.01)*

(21) Application number: **02735087.5**

(22) Date of filing: **23.04.2002**

(86) International application number:
**PCT/DK2002/000264**

(87) International publication number:
**WO 2002/086312 (31.10.2002 Gazette 2002/44)**

(54) **WIND TURBINE HAVING SECONDARY ROTORS**

WINDTURBINE MIT SEKUNDÄRROTOREN

EOLIENNE PRESENTANT DES ROTORS SECONDAIRES

(84) Designated Contracting States:
**AT BE CH CY DE DK ES FI FR GB GR IE IT LI LU MC NL PT SE TR**

(30) Priority: **23.04.2001 DK 200100641**

(43) Date of publication of application:
**25.02.2004 Bulletin 2004/09**

(73) Proprietor: **Technical University of Denmark 2800 Lyngby (DK)**

(72) Inventors:
• **MADSEN, Helge, Aagaard DK-4060 Kirke Saby (DK)**

• **RASMUSSEN, Flemming DK-4960 Holeby (DK)**

(74) Representative: **Plougmann & Vingtoft A/S Sundkrogsgade 9 P.O. Box 831 2100 Copenhagen Ø (DK)**

(56) References cited:
WO-A-99/63218    FR-A- 907 290
FR-A- 2 464 384    GB-A- 211 766
US-A- 4 656 362    US-A- 5 151 610

**Description**

The present invention relates to a wind turbine comprising a main rotor having at least one blade with at least one secondary rotor connected to an electric generator. The wind turbine is preferably designed so that the solidity of the secondary rotor and/or the blade(s) of the secondary rotor is/are twisted and/or the control of pitch of and/or the rotor speed of the secondary rotor is/are such that a thrust coefficient of the secondary rotor lower than 0.4 may be obtained.

The background of the novel wind turbine design is a fundamentally disadvantageous characteristic of the traditional wind turbine design, which is intensified by the continuous up-scaling of the turbines. In the prior art design, wind energy is converted into mechanical energy by means of the blades and is then transformed through a slow-speed main shaft to a gearbox where the speed is increased to typically 1500 revolutions per minute, which is the speed of the generator coupled to the gearbox. By up-scaling the turbines, the tip speed is only increased moderately for reasons of noise, which means that the torque M increases by the third power of rotor radius ($M \approx R^3$), whereas the converted power P only increases by the second power of radius ($P \approx R^2$). As the price of the gearbox is proportional to M, this means that the gearbox will account for a relatively larger share of the price of the overall construction. Furthermore, it Is well known that the gearbox is a critical component with many cost-intensive repairs. Finally, In the gearbox there is a loss of typically 1% per step, and for 1-2MW turbines the gearbox has 3-4 steps.

In the novel wind turbine design the principal idea is to avoid having to convert energy through a stow-rotating main shaft by moving the position of energy conversion from mechanical energy to electrical energy out to the tip of the blades. The energy conversion is preferably performed by mounting on each blade one or more secondary rotors, each coupled to its respective generator, and where the rotor area is perpendicular to the relative speed at the point in question. By placing the secondary rotors on the blade tip or on the outermost part of the blade, where the relative speed is high, it is achieved that the radius of the secondary rotor is only a fraction of the main rotor. For example the radius of the secondary rotor will be between 1.5 and 2 m for a two-bladed 3MW turbine (see more detailed calculation below). By placing the secondary rotors by the tip of the main blade and with the rotor area perpendicular to the resultant wind speed, the fact that the secondary rotors also provide induction on the flow in the wind direction is also utilized, the effective rotor diameter of the turbine thus corresponding to the sum of the diametres of the main rotor and the secondary rotor.

A wind turbine having secondary rotors is known from AGARD No. 243 ('243) as a proposal for overcoming the transmission problems. In '243 the wind turbine is described by means of a sketch showing a two-bladed turbine having a secondary rotor mounted near the blade tip of each blade.

From US 5,151,610 a two-blade wind turbine having a secondary rotor arranged at the distal end of each blade is known. The wind turbine is a upwind type wind turbine and the rotor of the secondary rotors are a multi-bladed propeller type in which the blades overlap each other in a frontal view and form a high frontal blade area to provide a high starting torque. Such a rotor type is characterised in having a large thrust coefficient. It is Indicated that the number of blades may be decreased. However, there is no disclosure relating to the operation conditions of the wind turbines neither does the patent deals with the aerodynamics relating thereto.

DE 27 37 767 also discloses a two blade upwind type wind turbine comprising secondary rotor. Similarly, there is no disclosure relating to the operation condition of the wind turbine neither does the patent deals with the aerodynamics in relation to the wind turbines having secondary rotors. GB-A-211 766 discloses a wind turbine, wherein the number of revolutions of the secondary rotor may be regulated.

One serious problem associated with the wind turbines according to the prior art is therefore to providing an appropriate design of a wind turbine having secondary rotors.

In this light it is an object of the present invention to provide a design of a turbine having secondary rotors (tip turbines) so that the total power coefficient (aerodynamic efficiency) of the secondary rotor and the main rotor is potentially advantageous.

The above object is achieved according to the invention in a first aspect by a wind turbine comprising a main rotor having at least one blade with at least one secondary rotor connected to an electrical generator, wherein a thrust coefficient of the secondary rotor lower than 0.4 may be obtained, the power coefficient of the secondary rotor thus ranging from 0.85 to 0.9.

The background of the invention is that it is recognized, In connection with the present invention, that the power coefficient of the secondary rotor is not limited by the well known maximum Betz limit (0.59) of the power coefficient of a stationary wind turbine. It is also recognized, in connection with the present invention, that the power coefficient of the secondary rotor goes towards 1 when the rotor load in terms of the thrust coefficient CT goes towards 0. Based on this recognition, the secondary rotor is designed to run with a low thrust coefficient (CT< 0.4) whereby a power coefficient between 0.9 and 1 may potentially be achieved for the secondary rotor. Thus, contrary to the ordinary teaching which teaches to operate the wind turbine rotor close to or at the Betz limit in order to operate the wind turbine optimal, the secondary rotor is in accordance with the present invention suggested to be operated at a low thrust coefficient (lower than 0.4) in order to provide overall optimal performance of the wind turbine.

In the embodiments where the generator Is positioned on the blades of the main rotor, the rotation of the main rotor will cause natural cooling of the generator, which means that additional energy consuming cooling of the generator may be avoided.

Moreover, the present invention makes it possible to use the generator with little or no slip, causing a high efficiency to be obtained, the secondary rotors causing considerable damping of the rotor torsion.

Furthermore, a wind turbine according to the present invention has the advantage that the fact that the rotor plane of the secondary rotor and the rotor plane of the main rotor may be angled may be used for providing the main rotor with a larger effectively swept area.

In several preferred embodiments the wind turbine comprises at least one control means for controlling the operating conditions of the main rotor and/or for controlling the operating conditions of the secondary rotor. The operating conditions of the main rotor and/or the secondary rotor are preferably controlled by control of pitch and/or rotor speed of the secondary rotor.

According to the present invention the control means preferably control(s) the operating conditions of the main rotor and the secondary rotor so that the thrust coefficient (CT) of the main rotor is maintained at approx. 0.89, which is generally the optimum load for a stationary wind turbine rotor. However, this only applies until the maximum power of the turbine is achieved. Subsequently, the thrust coefficient Is lowered with increased wind speed.

A further preferred characteristic of the present invention is that the power coefficient ($C_{p1}$) of the secondary rotor is maintained higher than preferably 0.8 and that the power coefficient ($C_p$) of the main rotor is maintained at a maximum, i.e. at approx. 0.5.

The operating conditions defined for the turbine are preferably provided in operation by the control means controlling the operating conditions of the main rotor and the secondary rotor by control of the pitch setting of the blade (s) of the main rotor and/or the pitch setting of the blade(s) of the secondary rotor. Alternatively or as a supplement to this, the control means control(s) the operating conditions of the turbine by changing the angle between the rotor plane of the secondary rotor and the rotor plane of the main rotor.

In a presently highly preferred embodiment of the invention, the secondary rotor is directly connected to the generator, i.e. connected without a gearing, which means that the transmission means, such as gear between the hub of the secondary rotor and the generator, may be completely omitted. However, in some situations it is suitable to place the generator distant from the secondary rotor, e.g. if weight is to be moved towards the centre of the secondary rotor. In these situations it is therefore necessary that the secondary rotor is connected to the generator through a transmission means.

In a preferred embodiment of the invention the secondary rotor is positioned near or in the blade tip of the blade of the main rotor, which means that the radius of the secondary rotor may be made smaller. In several of these preferred embodiments the secondary rotor is positioned at the centre of the tip vortex of the blade of the main rotor and is designed to have a direction of rotation which is equivalent to the rotation of the tip vortex. With such a configuration the energy in the tip vortex, forming a loss in the main rotor, may be partly used.

In several embodiments of the Invention the control means preferably comprise a computer system In data communication with means for determining the operating conditions of the main rotor and the secondary rotor and In data communication with means for changing the pitch setting of the blade(s) of the main rotor, the blade(s) of the secondary rotor and/or the angle between the rotor plane of the secondary rotor and the rotor plane of the main rotor and/or the characteristic of number of revolutions of the secondary rotor.

The present invention has been found particularly useful in connection with a rotor configuration as described in WO 99/63218 (Fig. 1, Fig. 2 and line 19, page 11 to line 17, page 12). According to these embodiments the main rotor preferably has two blades connected to a hub and to each other in such a manner that a pitch change of one blade mechanically causes the other blade to be pitched simultaneously and identically. In such further embodiments the turbine is preferably a downwind rotor turbine.

In a second aspect, the present Invention relates to a downwind type wind turbine comprising a main rotor having two blades mounted on a hub allowing rotation of the main rotor, each blade of the main rotor is having a secondary rotor arranged distant from the hub and connected to an electrical generator, wherein the blades of the main rotor and the blades of the secondary main rotors being non-pitchable or substantial non-pitchable.

Embodiments according to this aspect provides advantageous effects falling in line with the effects obtained with embodiments with those provided by embodiments according to the first aspect of the invention. Also, similarities exists between the two aspect and It is, thus, contemplated that a feature only mentioned In connection with one of the aspects is applicable in embodiments of the other aspect. As will be disclosed below, the present invention comprises further aspects and as these aspects are strongly linked it is further contemplated that features are interchangeable between the different aspect.

Also in connection with this aspect, it is generally preferred that each of the secondary rotors is connected without any gearing to the electrical generator.

It is furthermore preferred, that the rotational axis of the secondary rotors is fixed or substantially fixed relatively to axis of rotation of the main rotor.

In order to extract the energy in the tip vortices, it is preferred that the secondary rotors are located at the trailing edges of the blades of the main rotor.

It has been found, that the present aspect of the present invention is particular useful In connection with a downwind type wind turbine being a stall regulated type. In such embodiments it is preferred that wind turbine, further comprises control means for

- decreasing the load of the generator of the secondary rotors if the rotational speed of the main rotor exceeds a pre-set limit,
- increasing the load of the generator of the secondary rotors if the rotational speed of the main rotor drops below a pre-set limit,

Preferably, the pre-set limit is calculated based on a limit of the tip-speed velocity of the blades of the main rotor, said limit being equal 200 m/s, such as equal to 150, preferably 100 m/s.

Alternatively or in combination thereto, the pre-set limit for the rotational speed of the main rotor is calculated based on a tip speed ratio defined as the ratio between the tip speed of the secondary rotors to the tip speed of the main rotor, said pre-set limit being calculated so that the tip speed ratio being lower than 3, preferably lower than 2.75, such as lower than 2.5, more preferably lower than 2.25. This implies, that the tip speed of the secondary rotors is preferably lower than 300 m/s, which results in that the tip speed of the main rotor is preferably lower than 100 m/s.

It is in generally preferred that the wind turbine comprises control means for Increasing and decreasing the rotational speed of the rotors of the secondary rotors in order to obtain a thrust coefficient of the secondary rotors lower than 0.6, such as lower than 0.55, preferably lower than 0.5, such as lower than 0,45, more preferably lower than 0.4, or even lower than 0.35.

Preferably, the blades of the main rotor are mounted to the hub at their leading and trailing edges. Furthermore, It is preferred that the blades of the main rotor are mounted in a flexible manner to the hub so as to allow coning of the blades during operation of the wind turbine.

Such a flexibility in the mounting may preferably be provided by a flex-beam extending from the blades of the main rotor and to the hub of the main rotor.

In preferred embodiments according to the second aspect of the present invention, the blades of the main rotor is pre-coned mounted on the hub in downwind direction in order to provide clearance between a tower carrying the main rotor and the blades of the main rotor so as to keep the secondary rotors free of the tower during rotation of the main rotor.

The hub allows preferably teetering of the main rotor in order to avoid excessive bending moments acting on the tower, which bending moments may typically arise from gust in the wind, boundary layer flow of the wind towards the wind turbine, turbulence or the like.

In preferred embodiments, the two blades of the main rotor of the downwind type wind turbine are Integrally formed in a wing construction.

A third aspect of the present Invention relates to a safety brake for a wind turbine. In accordance with this aspect, the wind turbine comprises a main rotor having one or more blades, preferably two or three, mounted on a hub allowing rotation of the main rotor, each blade of the main rotor is having a secondary rotor arranged distant from the hub, wherein each blade of the main rotor comprises a cavity in which the blades of the secondary rotor may be accommodated, which cavity being covered by cover means covering the openings of the cavity and being moveable between a first position in which the opening of the cavity are covered and a second position in which blades of the second rotor can extend above the surface of the wing.

Preferably, each secondary rotor is arranged so that its rotational axis is oriented along a chord of the blade.

Also In this aspect, it is preferred that the wind turbine is a stall regulated type. Furthermore, is it preferred that the wind turbine is a downwind type wind turbine and/or that the main rotor has two or three blades.

According to fourth aspect of the invention it relates to a method for controlling a wind turbine comprising one or more of the features of the turbine according to the first aspect of the invention. The method thus comprises:

- control of the pitch angle and/or the rotor speed of the blade(s) of the secondary rotor, and/or
- control of the pitch angle of the blade(s) of the main rotor, and/or
- control of the angle between the rotor plane of the secondary rotor and the rotor plane of the main rotor

so that predefined operating conditions of the turbine are achieved.

In a preferred embodiment the rotor thrust coefficient of the secondary rotor is controlled, e.g. by appropriate adjustment of the number of revolutions, so that the main rotor runs at the maximum power coefficient, preferably at constant speed conditions.

In some situations, control of the main rotor preferably comprises control of the load on the secondary rotor so as to achieve a predetermined power coefficient of the main rotor, said control of the load on the secondary rotor comprising adjustment of the speed of the secondary rotor and/or adjustment of the blade pitch of the blades of the secondary rotor.

A further advantage of the present invention is that slowing down of the main rotor may be performed at least partly by either increasing the speed of and/or lowering the blade pitch of the secondary rotor so as to increase the trust coefficient of the secondary rotor.

The present invention and particularly preferred embodiments thereof will be described below In conjunction with the accompanying drawings, wherein:

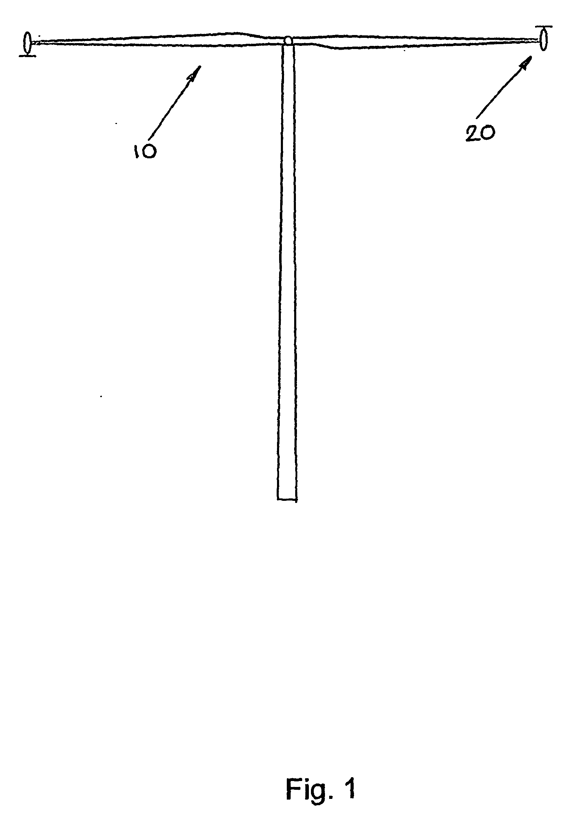

Fig. 1 schematically illustrates the energy conversion taking place through two secondary rotors attached to the blade tip on the main rotor. The secondary rotors are each directly coupled, i.e. coupled without a gearing, to their respective generators, and the electrical power is directed through cables to the rotor shaft and through a rotary switch to a cable in the tower.

Fig. 2 illustrates an actuator disc which is a concept of the ideal energy conversion in a wind turbine rotor and which is used for analyzing the energy conversion in the design in question.

Fig. 3 illustrates the power coefficients $C_p$ of a stationary rotor and $C_{p1}$ of a rotor translated in a static flow, shown as a function of the induction coefficient a through the rotor.

Fig. 4 illustrates the power coefficients $C_p$ of a stationary rotor and $C_{p1}$ of a rotor translated In a static flow, shown as a function of the thrust coefficient CT.

Fig. 5 Illustrates energy content as a function of wind speed (tip speed).

Fig. 6 illustrates the radius of the secondary rotors of a 3MW 2-bladed turbine as a function of the tip speed of the main rotor.

Fig. 7 discloses a two-bladed wind turbine of a downwind type,

Fig. 8 discloses schematically the distal end of a wing according to the embodiment according to fig. 7.

Fig. 9 discloses schematically the hub assembly of the embodiment according to fig. 7.

Fig. 10 discloses schematically use of secondary rotors with no generators used for safety braking system.

Fig. 11 discloses schematically a further hub assembly applied in connection with the present invention, and

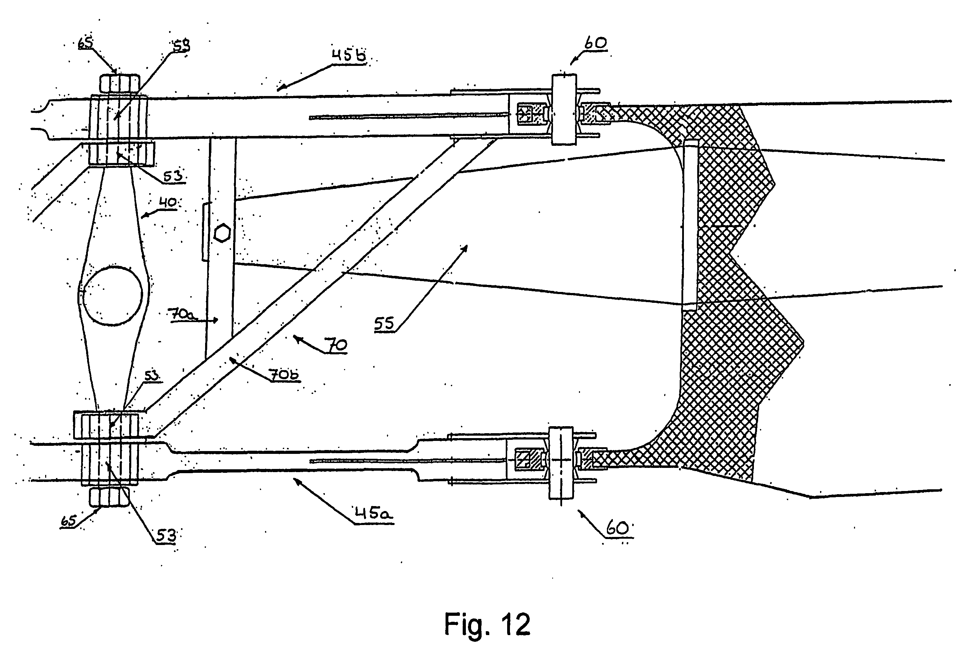

Fig. 12 discloses a cut out of the further hub assembly of fig. 11.

*Calculation of energy conversion*

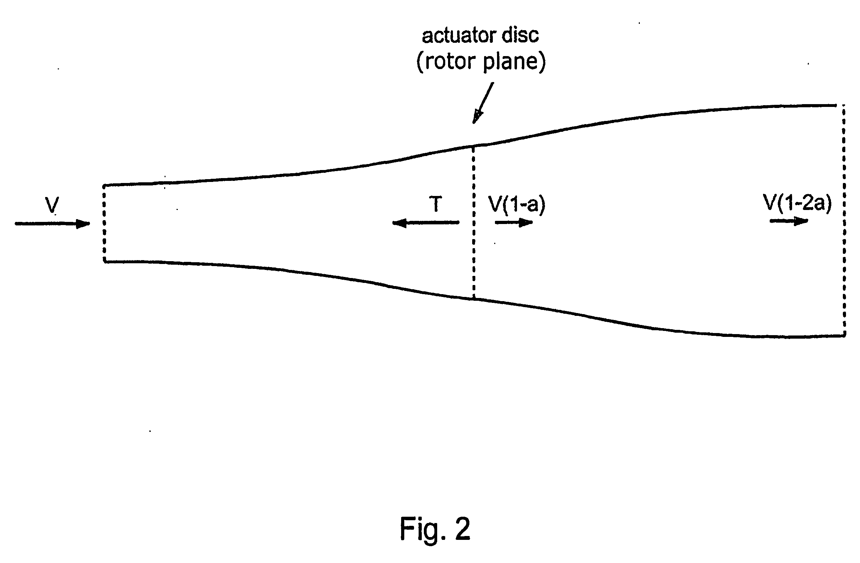

The underlying conditions of energy conversion in the novel wind turbine design may be analyzed on the basis of the actuator disc concept, which is the definition of an ideal energy conversion In a rotor, cf. figure 2.

For the main rotor there Is the following well known connection between the rotor thrust T and the flow rate through the rotor plane V(1-a), where a is the Interference coefficient

$$T = 2A\rho V^2(1-a)a \qquad . \qquad\qquad (1)$$

The thrust coefficient CT Is defined as

$$C_T = \frac{T}{\frac{1}{2}\rho V^2 A} \Rightarrow \qquad (2)$$

$$C_T = 4(1-a)a \qquad (3)$$

The converted wind power P is

$$P = TV(1-a) = 2A\rho V^3 (1-a)^2 a \qquad (4)$$

and the power coefficient $C_p$ is given by

$$C_P = \frac{P}{\frac{1}{2}\rho V^3 A} \Rightarrow \qquad (5)$$

$$C_P = 4(1-a)^2 a \qquad (6)$$

For the secondary rotor the same equations apply to the energy conversion, but here the rotor moves at a speed $V_1$ through a static flow. The converted power is still given by the equation

$$P_1 = T_1 V_1 (1-a) = 2A\rho V_1^3 (1-a)^2 a \qquad (7)$$

where index 1 merely indicates that It is the secondary rotor.

The only, however substantial, difference compared to the main rotor is the definition of the power coefficient $C_{P1}$, as the power, to which the converted power is now to be related, is

$$T_1 V_1 \qquad (8)$$

which is the power used for translating the secondary rotor with the speed V. This gives the following expression of the power coefficient $C_{P1}$ of the secondary rotor

$$C_{p1} = \frac{T_1 V_1 (1-a)}{T_1 V_1} = (1-a) \qquad (9)$$

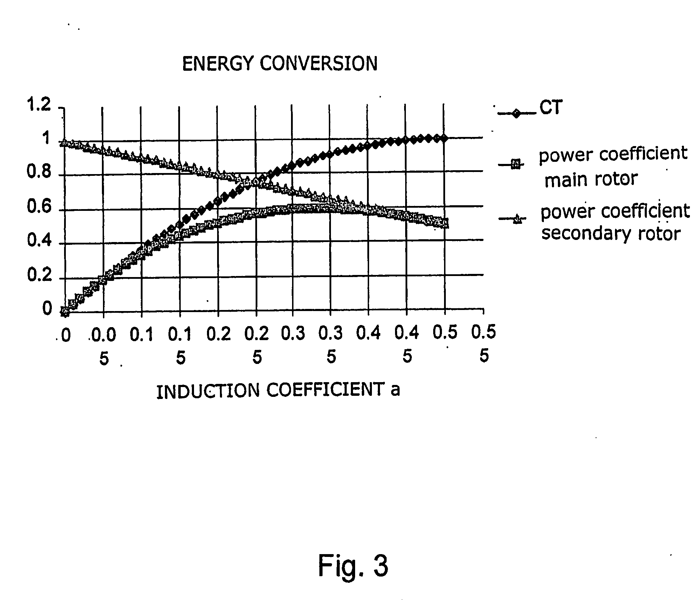

The power coefficients of the main rotor and the secondary rotor are plotted in figure 3 as a function of the Interference coefficient a, and as it appears they differ substantially. The maximum efficiency of the main rotor is 0.59, while being 1 for the secondary rotor. $C_{p1}$ goes towards 1 for a going towards 0, whereas $C_p$ then goes towards 0.

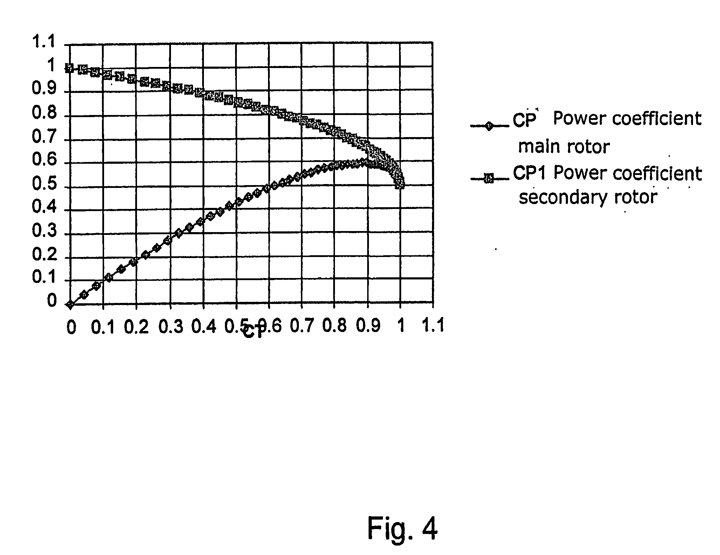

Moreover, the power coefficients of the main rotor and the secondary rotor are plotted as a function of the thrust coefficient CT in figure 4, and it appears that a high power coefficient of the secondary rotor is achieved when the load is low (obtained by low solidity, high pitch on the blades and/or low tip speed conditions), whereas the inverse applies to the main rotor. All In all this means that use of the secondary rotor for energy conversion may occur with an efficiency of approx. 1 and not, as for a general wind turbine, with an efficiency of 0.59. The higher efficiency of the secondary rotors is quite crucial for the concept being profitable at all, both financially and In relation to energy.

The size of the secondary rotors

As mentioned above, the size of the secondary rotors will only be a fraction of the size of the main rotors because they are placed at the blade tip where the flow rate is high (tip speed).

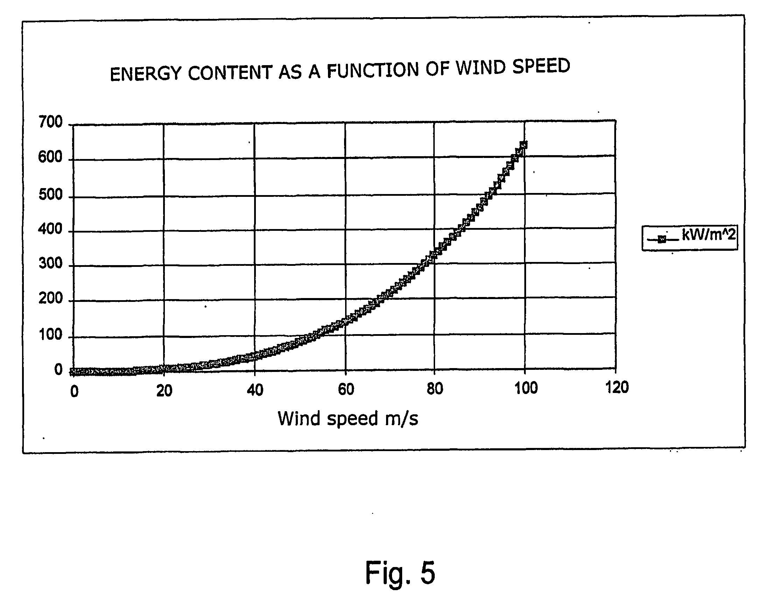

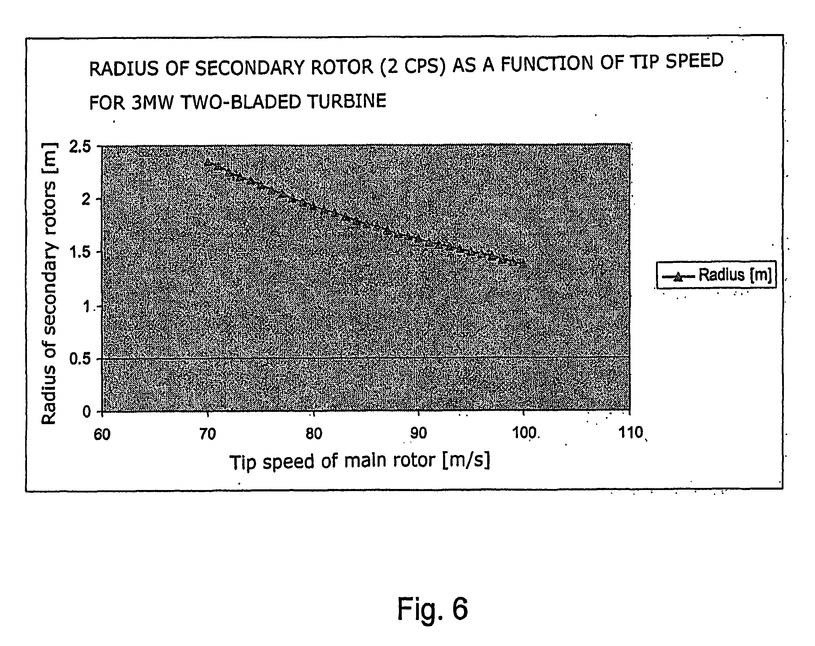

The energy content per $m^2$ as a function of the resultant wind speed is shown in figure 5, and it appears that in the typical tip speed range, e.g. 70 m/s, the power is 200 $kW/m^2$. The size of the secondary rotors of a 3MW 2-bladed turbine is shown in figure 6 as a function of the tip speed of the main rotor and with the assumption of a low thrust coefficient of 0.4 in order to maintain a high power coefficient.

The power coefficient $C_{P1}$ of the secondary rotor is for ideal energy conversion. There will be a loss from rotation of the wake behind the rotor and from viscose loss from the flow around the blades. The real, total power coefficient of the secondary rotor will probably decrease to between 0.8 and 0.85. On the other hand there is no loss in the gearbox, and a generator with a very small loss may be used (generator with little slip), thus reducing the difference between the total power coefficient of a traditional design and the novel design.

Aerodynamic noise will be a potential problem due to a high tip speed of the secondary rotor, but the aerodynamic noise may e.g. be reduced by designing the secondary rotor as a closed turbine.

Summary of advantages and characteristics of the Invention:

- no gearbox
- no torque through the main shaft
- strongly simplified nacelle construction with resultant estimated weight reduction of the nacelle of 60-80% (primarily bearing housing for main shaft and yaw bearing)
- substantially lower top weight on tower gives less expensive tower design
- modular construction - secondary rotor + generator readily replaceable
- suitable for flexible 2-bladed teeter rotor, a certain weight In the blade tip being advantageous due to the centrifugal relief
- good electric quality even with a generator with little slip
- variable speed built into the design
- generators having super-conductive characteristics may be applied

The novel design is expected to be more competitive than both the traditional Danish three-bladed turbine concept and foreign concepts with a directly driven generator. The biggest savings are a result of the omission of the gearbox, and for a MW turbine the gearbox typically accounts for approx. 15% of the total turbine price. Additionally, the cost of the nacelle, in particular, will be reduced considerably, and the load on the rotor shaft will be smaller. All in all this means that the top weight on the tower may be reduced considerably, as may the price of the tower.

The entire design is fundamentally different from the designs used today. The fundamental change consists in the energy conversion from mechanical to electrical energy being moved onto the main rotor so that the main shaft is completely relieved from torque. Additionally, it will be possible to optimize the novel subcomponents; suspension and design of the secondary rotor; development of a light, compact generator; rotary switches for transport of the electrical power from the secondary rotors down to the bottom of the tower; design of the nacelle, etc.

The design is particularly useful for MW turbines and also offshore due to expected higher aerodynamic noise. The market for this type of turbines will grow rapidly in the years to come and will account for several billion Danish kroner a year. More detailed characteristics of the Invention - secondary rotors:

- operating at a low thrust coefficient (less than 0.4) with the object of achieving a small loss in energy conversion,
- rotor coupled directly to a generator designed with a load depending number of revolutions, which means that the main rotor operates with a variable number of revolutions and optimal efficiency,
- having three or more blades with a fixed hub so as to achieve a non-cyclic varying gyromoment for the secondary rotors,
- the rotor's varying gyromoment with the number of revolutions being used for twisting the main blade and damping blade oscillations,
- or having a two-bladed rotor with a teetered hub and delta 3 coupling with the object of eliminating the effect of the gyromoment on the blade,
- the direction of rotation of the rotor being such that the tip loss on the main rotor is used,
- the periphery of the blades forming a rotating annular element enclosed by a second annular element (stationary in relation to the main blade), the two annular elements forming the generator,

- the power of the generator being directed through cables at the leading edge of the main blade (front half) with a view to defrosting and advantageous mass distribution,
- the main rotor being two-bladed with a teetered hub and "hinged" blades (Risø concept) in order to use the centrifugal relief of the tip mass of the blades,
- the brake and safety system of the turbine consisting in letting the secondary rotors "run away", resulting in the pressure and thus the resistance exceeding the torque of the main rotor,
- the electrical power being transferred through a hollow shaft from the main rotor directly to the tower by means of a special coupling assembly, causing cable twisting to be avoided as a result of yawing,
- the secondary rotors Instead of propellers being designed as vertical shaft rotors (Darrieus, Gyro) either with the generator placed in the tip of the main blade or in the root and connected to the rotor by (coalfibre) shafts.

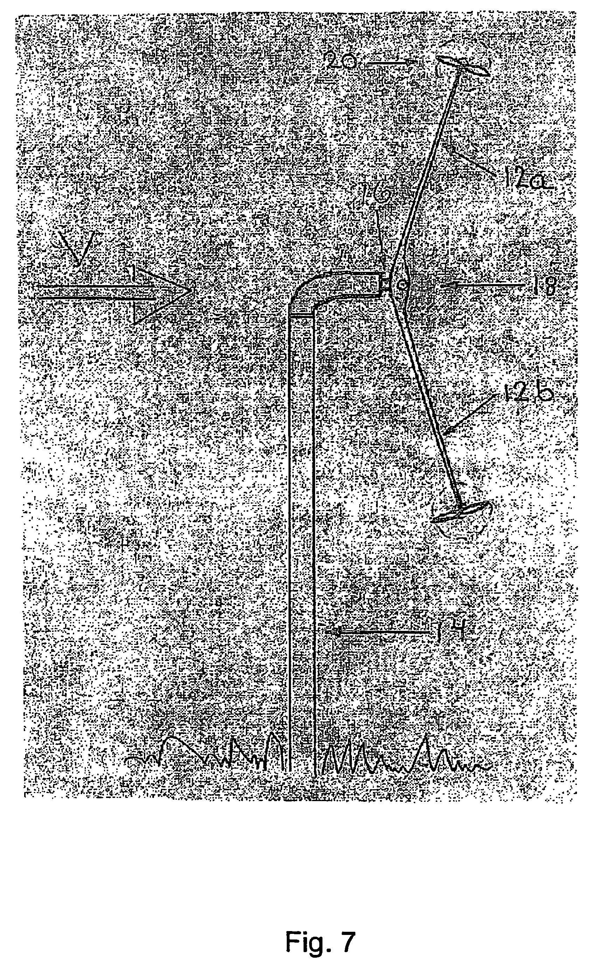

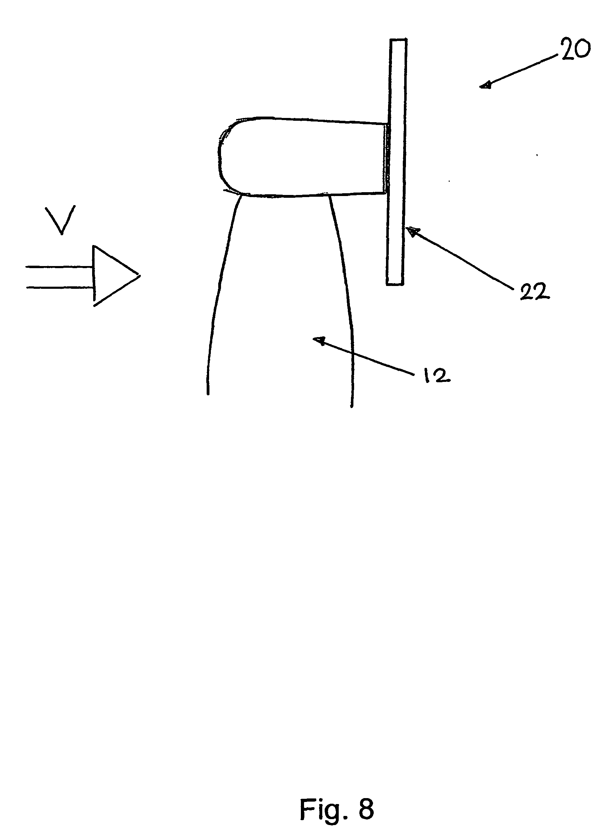

With reference to fig. 7 a presently most preferred embodiment of the present Invention will now be disclosed. The wind turbine of fig. 7 is a so-called downwind turbine, I.e. the main rotor 10 of the wind turbine is located downstream the tower 14 carrying the rotatably mounted main shaft 16 on which the two blades 12a, 12b are arranged via a hub 18. Distant on each blade 12 is located a secondary rotor 20. Preferably, the secondary rotors are placed at the tip of the blades 12, but they may be placed at other positions along the extension of the blades. As indicated on fig. 8 the rotor 22 of the secondary rotor 20 is located downstream of the blade, i.e. located at the trailing edge of the blade 12, whereby the energy in the tip vortex may be recovered by the secondary rotor. Alternatively, the rotor 22 of the secondary rotor 20 may be located upstream, i.e. at the leading edge of the blade 12, and in such a constellation the rotor 22 will not be in the wind shadow of the wind 12.

The wind turbine of fig. 7 is a stall regulated wind turbine and the blades 12 are, thus, fixed to the hub 18 in such a manner that their pitch angle is fixed. Furthermore, secondary rotors 20 are attached to the blades 12 in such a manner that the angle between the axis of rotation of the main rotor 10 and the angle of the rotation of the rotors 22 is fixed. Furthermore, the pitch angle of the blades of the rotors 22 is fixed.

A very advantageously effect is achieved In connection with the present invention as will be disclosed In the following. When a downwind turbine is exposed to the wind, forces are generated which starts to cone the blades. Such a coning will introduce a moment in the root of the blade 12 which must either be compensated or the blade 12 must be supported in the hub In a manner where no moment can be taken up. In accordance with the present invention, secondary rotors 20 each having a substantial weight are placed at distal end of the blades. As soon as a small coning appears the centrifugal forces will have an upwind component acting on the blades 12 which tends to outbalance or totally outbalances the forces generating the coning. This effect may be exploited to keep a pre-set coning constant or substantially constant during operation of the wind turbine, which pre-set coning is desirable in the sense that it helps in securing that the secondary rotors 20 keep free of the tower 14 during operation of the wind turbine.

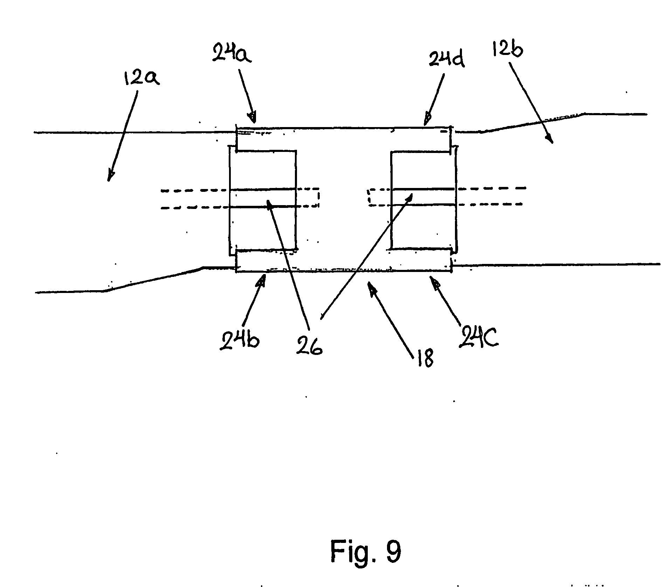

As indicated on fig. 9 the blades 12a, 12b are attached to the hub 18 at the locations 24a, 24b, 24c and 24d. The blades are attached to the hub in a flexible manner, either by incorporating a spring action into the attachments 24 or by applying a flex-beam 26 as shown in fig. 9. Furthermore, the hub 18 allows a teeter-motion of the main rotor 10.

As an alternative to the hub assembly disclosed In fig. 9, the two blades 12 could be made in a single pieces having attachment means for attaching this blade construction to the shaft 16 in a manner allowing teeter-motion of the main rotor 10. In such a construction, it is preferred to built into the blade construction near the attachment means one or more sections being more flexible than the rest of the blade construction in order allow the blades to cone.

Each blade comprises a shell having the desired aerodynamic shape of the blades. The shell is re-enforcement in the leading and/or trailing edge region(s), which re-enforcement comprises strings of kevlar fibres, carbon fibres or the like. These strings serves to strengthening the blades and to take up bending moments from gravitational forces arising from the secondary rotors 20. The latter results the centrifugal forces are distributed along the entire length of the blades, thereby rendering it easier to outbalance the longitudinal tension In the blades arising from the centrifugal forces.

The preferred mode of operation of the wind turbine is characterised the ratio of tip speed for the secondary rotor 20 to the tip speed of the main rotor 20 is kept lower than 3. A typical mode of operation is where the tip speed of the main rotor is around 100 m/s and where the tip speed of the secondary rotors 20 is maximum 300 m/s.

Control of the wind turbine is performed by controlling the load of the generators of the secondary rotors 20, in the following manner:

- if the rotational speed of the main rotor 10 exceeds a pre-set upper limit, the load of the generators are lowered to allow the speed of the rotors 22 to Increase thereby generating larger braking thrust and
- if the rotational speed of the main rotor 10 drops below a pre-set lower limit, the load of the generators are increased to allow the speed of the rotors 22 to decrease thereby generating a lower braking thrust.

By this manner of controlling the operation of the wind turbine a further very advantageous effect is achieved, namely a safety brake. The safety brake feature is activated by letting the secondary rotors run freely, i.e. no load is applied to the generators whereby the secondary rotors speed up resulting In a very high braking thrust being generated breaking down the rotational motion of the main rotor.

Furthermore, this air brake has the potential to be fail safe, in the sense that if controlling of one or more of the generators fails or other failure on the generator occur, which in a traditional wind turbine would cause the main rotor to continuously increasing its rotational speed, the speed of the secondary rotors will increase rapidly generating a braking force.

The result is, that the rotational speed of the main rotor of a wind turbine according to the present invention will be limited.

The controlling of the load of the generators are performed in known manner by using a controlling unit receiving a speed signal from the a pick-up arranged on the wind turbine and measuring the rotational speed of the main rotor 10. A computer of the controlling unit continuously compares the rotational speed of the main rotor and if the speed is out of range, the load of the generators are changed in accordance therewith by for instance changing the magnetising current of the generators.

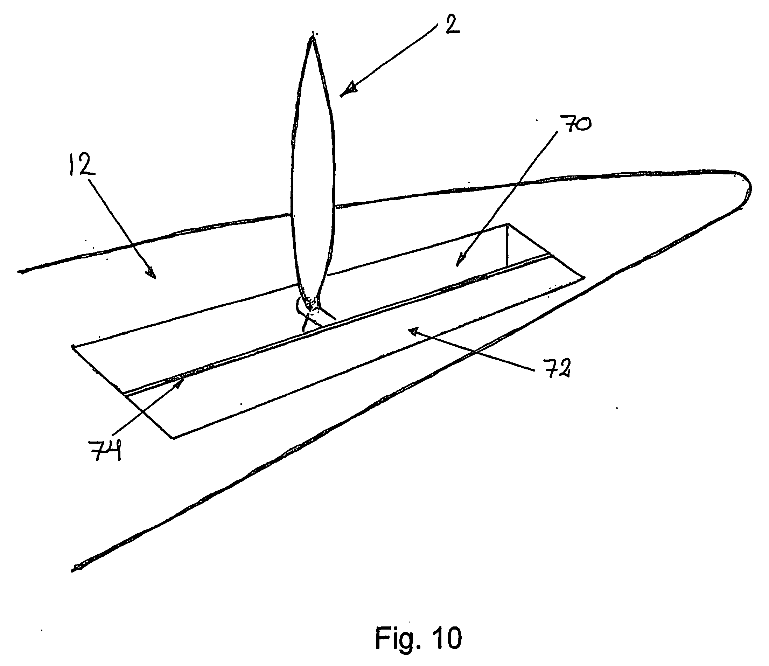

This type of air brake may also be implemented in the manner disclosed in fig. 10 which discloses a blade 12. In a cavity 70 of the blade in the vicinity of the blade tip, a rotatably mounted rotor 20 is arranged. During normal operation, i.e. where no braking is needed, the cavity is covered by covers 72, one on each side of the blade 12, attached to the blade 12 by hinges 74. When braking is needed these covers are opened and air passing the cavity will initiate rotation of the rotor 20. After rotation has been initiated, the rotor will increase its rotational speed rather rapidly resulting in generation of a large braking power. When breaking power is no longer needed, the blades 12 of the rotor 20 is arranged aligned with the longitudinal direction of the blade 12 and the cavity is closed by arranging the covers 72 in their original position.

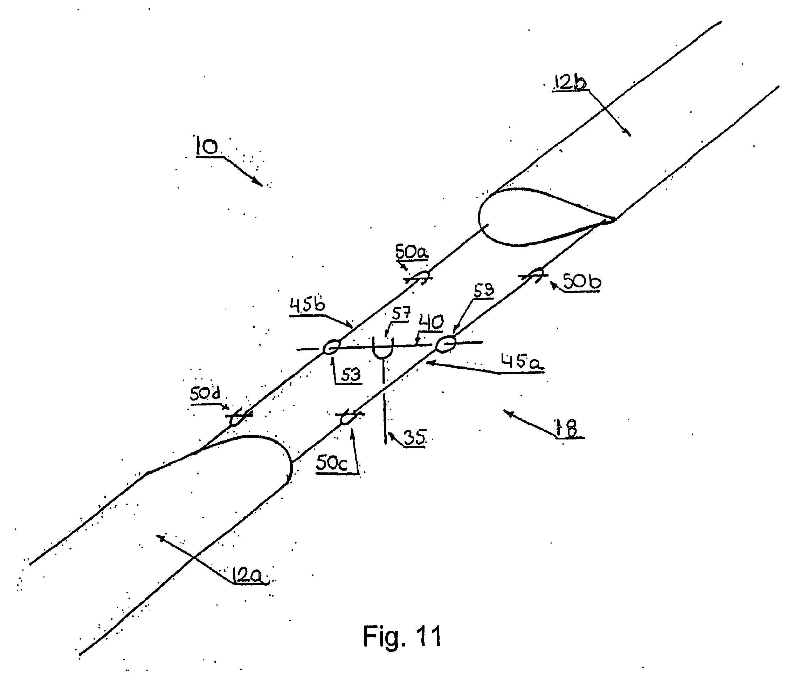

With reference to fig. 11 a specific embodiment of a hub assembly 18 will be addressed. The hub assembly is designed to allow pitching of the blades. However, the hub assembly may easily be modified to not allow a substantial pitching of the blades. In this embodiment, the rotor 10 comprises blades 12a,b having leading edges and trailing edges, a main shaft 35 and a teeter shaft 40. The hub 18 comprises two hub main parts 45a and 45b, where hub main part 45b extends from hinge 50a arranged in the vicinity of the leading edge 20 of blade 12a to a hinge 50d arranged in the vicinity of the trailing edge 25 of wing 15b. Similarly, the hub main part 45a extends from a hinge 50b arranged at the trailing edge 25 of blade 12a to a hinge 50c arranged at the leading edge 20 of blade 12a.

The two hub main parts 45a and 45b are connected to the teeter shaft through bearings 53 allowing the two hub main parts 45a,b to rotate around the longitudinal direction of the teeter shaft 40. The teeter shaft 40 is in turn connected to the main shaft 35 through a hinge 57 allowing the teeter shaft to rotate around its longitudinal direction.

The hinge 57 through which the teeter shaft is connected to the main shaft 35 may be dispensed in this embodiment of the invention as the bearings through which the hub main parts 45 a and 45 b are connected to the teeter shaft may provide the teeter movement of the rotor.

By this way of hinging the blades 12 a and b to the main shaft 35 the rotor is able to teeter and the wings are able to cone as well as being able to pitch.

Furthermore, the pitch angle of each of the blades 12 a and b is set or controlled synchronously due to the hub main parts 45 a and 45 b. As these parts are pivotally connected to the teeter shaft 40 a rotation of the blade 12 a around its longitudinal direction in clock-wise direction will cause the hub main part 45 b to rotate around the longitudinal direction of the teeter shaft 40 which in turn causes the blade 12 b also to rotate clock-wise around its longitudinal direction due to the coupling of the blades by the second hub main part 45 a. It should be noted, that this description only covers one way of looking at the dynamics Involved in the interaction between the two blades 15 a and b, as this interaction actually is cyclic in the sense that all the actions occur simultaneous.

As the hinges 50 a, b and 50 c, d allow the blades to cone a resistance must be applied to these hinges so that the blades 12 a, b may be able to sustain the forces of the wind acting on the wings in a direction normal to surface of the wings, otherwise the coning of the wings would only be controlled - even though this may be preferred in certain preferred embodiments of the invention - by the centrifugal forces resulting from the rotation of the blades 12 a, b.

Such a resistance is in the preferred embodiment shown in fig. 2 a so called flex-beam general Indicated by numeral 55 providing a suitable stiffness and at the same time allowing the wing to cone. In general the flex-beam 55 should allow the wing to cone so much as 60-70° in order to reduce the thrust of the rotor, in case the rotor is parked at down-wind conditions in high wind conditions.

Additionally, the flex-beam 55 may also be designed to control the pitch of the blades, and In this case the flex-beam should be able to and be designed to withstand torsion, as torsion would be applied to it when the blades pitch.

**Claims**

1. A wind turbine comprising a main rotor having at least one blade with at least one secondary rotor, each secondary rotor being connected to an electric generator, the secondary rotor is positioned near or at the blade tip of the blade of the main rotor at the centre of the tip vortex of the blade of the main rotor and has a direction of rotation which is equivalent to the rotation of the tip vortex, the wind turbine further comprising at least one control means for controlling the operating conditions of the main rotor and for controlling the operating conditions of the secondary rotor, wherein

   - the control of the pitch and/or the rotor speed of the secondary rotor
   is/are controlled by the control means such that a thrust coefficient of the secondary rotor lower than 0.4 may be obtained.

2. A wind turbine according to claim 1, wherein the control means control(s) the operating conditions of the main rotor and the secondary rotor by controlling the pitch setting of the blade(s) of the main rotor and/or the pitch setting of the blade(s) of the secondary rotor.

3. A wind turbine according to 1 or 2, wherein the secondary rotor is connected without any gearing to the generator.

4. A wind turbine according to any of the claims 1-2, wherein the secondary rotor is connected to the generator by means of a transmission means.

5. A wind turbine according to any of the preceding claims, wherein the control means comprise a computer system in data communication with means for determining the operating conditions of the main rotor and the secondary rotor and in data communication with means for changing the pitch setting of the blade(s) of the main rotor, the blade(s) of the secondary rotor and/or the rotation characteristic of the secondary rotor.

6. A wind turbine according to any of the preceding claims, wherein the turbine is a downwind rotor turbine.

7. A downwind type wind turbine comprising a main rotor having two blades mounted on a hub allowing rotation of the main rotor, each blade of the main rotor is having a secondary rotor arranged distant from the hub and connected to an electrical generator, wherein the blades of the main rotor and the blades of the secondary rotors being non-pitchable or substantial non-pitchable, the wind turbine further comprising control means for increasing and decreasing the rotational speed of the secondary rotors in order to obtain a thrust coefficient of the secondary rotors lower than 0.4.

8. A downwind type wind turbine according to clam 7, wherein each of the secondary rotors is connected without any gearing to the electrical generator.

9. A downwind type wind turbine according to claim 7 or 8, wherein the rotational axis of the secondary rotors is fixed or substantially fixed relatively to axis of rotation of the main rotor.

10. A downwind type wind turbine according to any of the claims 7-9, wherein the secondary rotors are located at the trailing edges of the blades.

11. A downwind type wind turbine according to any of the claims 7-10, wherein the wind turbine is a stall regulated type.

12. A downwind type wind turbine according to any of the claims 7-11, further comprising control means for

   - decreasing the load of the generator of the secondary rotors if the rotational speed of the main rotor exceeds a pre-set limit,
   - increasing the load of the generator of the secondary rotors if the rotational speed of the main rotor drops below a pre-set limit,

13. A downwind type wind turbine according to claim 12, wherein the pre-set limit is calculated based on a limit of the tip-speed velocity of the blades of the main rotor, said limit being equal 200 m/s, such as equal to 150, preferably 100 m/s.

14. A downwind type wind turbine according to claim 12, wherein the pre-set limit for the rotational speed of the main rotor is calculated based on a tip speed ratio defined as the ratio between the tip speed of the secondary rotors to the tip speed of the main rotor, said pre-set limit being calculated so that the tip speed ratio being lower than 3, preferably lower than 2.75, such as lower than 2.5, more preferably lower than 2.25.

15. A downwind type wind turbine according to any of the claims 7-14, wherein the blades of the main rotor are mounted to the hub at their leading and trailing edges.

16. A downwind type wind turbine according to any of the claims 7-15, wherein the blades of the main rotor are mounted in a flexible manner so as to allow coning of the blades during operation of the wind turbine.

17. A downwind type wind turbine according to clam 16, wherein the flexibility in the mounting is provided by a flex-beam.

18. A downwind type wind turbine according to any of the claims 7-17, wherein the blades of the main rotor is pre-coned mounted on the hub in downwind direction.

19. A downwind type wind turbine according to any of the claim 7-18, wherein the hub allows teetering of the main rotor.

20. A downwind type wind turbine according to any of the claims 7-19, wherein the two blades are integrally formed in a wing construction.

21. A method for controlling a wind turbine according to any of the claims 1-6, the method comprises

   - controlling the pitch angle and/or the rotor speed of the blade(s) of the secondary rotor
   so that predefined operating conditions of the turbine are achieved.

22. A method according to claim 21, wherein control of the main rotor comprises control of the load on the secondary rotor so as to achieve a predetermined power coefficient of the main rotor, said control of the load on the secondary rotor comprising adjustment of the speed of the secondary rotor and/or adjustment of the blade pitch of the blades of the secondary rotor.

23. A method according to claim 21 or 22, wherein slowing down of the main rotor is performed at least partly by either increasing the speed of and/or lowering the blade pitch of the secondary rotor so as to increase the thrust coefficient of the secondary rotor.

**Patentansprüche**

1. Windkraftanlage, umfassend einen Hauptrotor mit mindestens einem Blatt mit mindestens einem sekundären Rotor, wobei jeder sekundäre Rotor mit einem elektrischen Generator verbunden ist, wobei der sekundäre Rotor nahe oder an der Blattspitze des Blatts des Hauptrotors im Mittelpunkt des Spitzenwirbels des Blatts des Hauptrotors angeordnet ist und eine Drehrichtung aufweist, die gleich der Drehung des Spitzenwirbels ist, wobei die Windkraftanlage weiterhin mindestens ein Regelungsmittel zum Regeln der Betriebsbedingungen des Hauptrotors und zum Regeln der Betriebsbedingungen des sekundären Rotors aufweist, wobei

   - die Regelung von Pitch und/oder Rotordrehzahl des sekundären Rotors derart von dem Regelungsmittel geregelt wird, dass ein Schubkoeffizient des sekundären Rotors von weniger als 0,4 erreichbar ist.

2. Windkraftanlage nach Anspruch 1, wobei das bzw. die Regelungsmittel die Betriebsbedingungen des Hauptrotors und des sekundären Rotors durch Regelung der Pitcheinstellung des Blatts bzw. der Blätter des Hauptrotors und/ oder der Pitcheinstellung des Blatts bzw. der Blätter des sekundären Rotors regelt bzw. regeln.

3. Windkraftanlage nach Anspruch 1 oder 2, wobei der sekundäre Rotor ohne Getriebe mit dem Generator verbunden ist.

4. Windkraftanlage nach einem der Ansprüche 1-2, wobei der sekundäre Rotor mittels eines Übertragungsmittels mit dem Generator verbunden ist.

5. Windkraftanlage nach einem der vorhergehenden Ansprüche, wobei die Regelungsmittel ein Computersystem umfassen, das Daten mit Mitteln zur Bestimmung der Betriebsbedingungen des Hauptrotors und des sekundären Rotors austauscht und das Daten mit Mitteln zur Veränderung der Pitcheinstellung des Blatts bzw. der Blätter des Hauptrotors, des Blatts bzw. der Blätter des sekundären Rotors und/oder der Drehcharakteristik des sekundären Rotors austauscht.

6. Windkraftanlage nach einem der vorhergehenden Ansprüche, wobei die Anlage eine Leeläuferanlage ist.

7. Windkraftanlage vom Leeläufertyp, umfassend einen Hauptrotor mit zwei Blättern, die an einer Nabe montiert sind, welche die Drehung des Hauptrotors ermöglicht, wobei jedes Blatt des Hauptrotors einen sekundären Rotor aufweist, der in einem Abstand zur Nabe angeordnet ist und mit einem elektrischen Generator verbunden ist, wobei Winkel der Blätter des Hauptrotors und der Blätter des sekundären Rotors nicht verstellbar oder im Wesentlichen nicht verstellbar ist, wobei die Windkraftanlage weiterhin Regelungsmittel zur Erhöhung oder Verringerung der Drehzahl der sekundären Rotoren umfasst, um einen Schubkoeffizienten der sekundären Rotoren von weniger als 0,4 zu erreichen.

8. Windkraftanlage vom Leeläufertyp nach Anspruch 7, wobei jeder der sekundären Rotoren ohne Getriebe mit dem elektrischen Generator verbunden ist.

9. Windkraftanlage vom Leeläufertyp nach Anspruch 7 oder 8, wobei die Drehachse der sekundären Rotoren im Verhältnis zur Drehachse des Hauptrotors fixiert oder im Wesentlichen fixiert ist.

10. Windkraftanlage vom Leeläufertyp nach einem der Ansprüche 7-9, wobei die sekundären Rotoren an den Hinterkanten der Blätter angeordnet sind.

11. Windkraftanlage vom Leeläufertyp nach einem der vorhergehenden Ansprüche 7-10, wobei die Windkraftanlage vom Stallregelungstyp ist.

12. Windkraftanlage vom Leeläufertyp nach einem der vorhergehenden Ansprüche 7-11, weiterhin umfassend Regelungsmittel zum

- Verringern der Last am Generator der sekundären Rotoren, wenn die Drehzahl des Hauptrotors einen vorbestimmten Grenzwert überschreitet,
- Erhöhen der Last am Generator der sekundären Rotoren, wenn die Drehzahl des Hauptrotors einen vorbestimmten Grenzwert unterschreitet,

13. Windkraftanlage vom Leeläufertyp nach Anspruch 12, wobei der vorbestimmte Grenzwert auf Grundlage eines Grenzwerts der Geschwindigkeit an der Spitze der Blätter des Hauptrotors ermittelt wird, wobei der Grenzwert gleich 200 m/s, wie gleich 150, vorzugsweise 100 m/s ist.

14. Windkraftanlage vom Leeläufertyp nach Anspruch 12, wobei der vorbestimmte Grenzwert der Drehzahl des Hauptrotors auf Grundlage eines Spitzengeschwindigkeitsverhältnisses ermittelt wird, das als das Verhältnis zwischen der Geschwindigkeit an der Spitze der sekundären Rotoren und der Geschwindigkeit an der Spitze des Hauptrotors definiert ist, wobei der vorbestimmte Grenzwert derart ermittelt wird, dass das Spitzengeschwindigkeitsverhältnis niedriger als 3, vorzugsweise niedriger als 2,75, wie niedriger als 2,5, mehr bevorzugt niedriger als 2,25, ist.

15. Windkraftanlage vom Leeläufertyp nach einem der Ansprüche 7-14, wobei die Blätter des Hauptrotors an ihren Vorderkanten und Hinterkanten an der Nabe montiert sind.

16. Windkraftanlage vom Leeläufertyp nach einem der Ansprüche 7-15, wobei die Blätter des Hauptrotors auf flexible Weise derart montiert sind, eine nach oben gerichtete Winkelstellung der Blätter während des Betriebs der Windkraftanlage zu ermöglichen.

17. Windkraftanlage vom Leeläufertyp nach Anspruch 16, wobei die Flexibilität der Montierung durch eine Blattwurzel mit geringer Biegefestigkeit (Flex-Beam) bereitgestellt wird.

18. Windkraftanlage vom Leeläufertyp nach einem der Ansprüche 7-17, wobei die Blätter des Hauptrotors mit vorbestimmter nach oben gerichtete Winkelstellung in Leerichtung an der Nabe montiert sind.

**19.** Windkraftanlage vom Leeläufertyp nach einem der Ansprüche 7-18, wobei die Nabe das Pendeln des Hauptrotors zulässt.

**20.** Windkraftanlage vom Leeläufertyp nach einem der Ansprüche 7-19, wobei die zwei Blätter einstückig zu einer Flügelstruktur ausgebildet sind.

**21.** Verfahren zur Regelung einer Windkraftanlage nach einem der Ansprüche 1-6, das Verfahren umfassen:

- Regelung des Pitchwinkels und/oder der Rotordrehzahl des Blatts bzw. der Blätter des sekundären Rotors, sodass die vorbestimmten Betriebsbedingungen der Anlage erreicht werden.

**22.** Verfahren nach Anspruch 21, wobei die Regelung des Hauptrotors die Regelung der Last am sekundären Rotor umfasst, um einen vorvorbestimmten Leistungskoeffizienten des Hauptrotors zu erreichen, wobei die Regelung der Last am sekundären Rotor eine Einstellung der Drehzahl des sekundären Rotors und/oder eine Einstellung des Blattwinkels des Blatts bzw. der Blätter des sekundären Rotors umfasst.

**23.** Verfahren nach Anspruch 21 oder 22, wobei Verlangsamen des Hauptrotors wenigstens teilweise durch entweder Erhöhen der Drehzahl und/oder Verkleinerung des Blattwinkels des sekundären Rotors durchgeführt wird, um den Schubkoeffizienten des sekundären Rotors zu erhöhen.


**Revendications**

**1.** Éolienne comprenant un rotor principal équipé d'au moins une pale avec au moins un rotor secondaire dont chacun est connecté à un générateur électrique, ledit rotor secondaire étant positionné à proximité ou au niveau de l'extrémité de la pale du rotor principal, au centre du tourbillon d'extrémité de la pale du rotor principal, et ayant un sens de rotation équivalent à la rotation du tourbillon d'extrémité, l'éolienne comprenant en plus au moins un moyen de commande permettant de commander les conditions de fonctionnement du rotor principal et de commander les conditions de fonctionnement du rotor secondaire, dans laquelle

- la commande du calage et/ou de la vitesse du rotor secondaire est assurée par ledit moyen de commande de façon à obtenir un coefficient de poussée du rotor secondaire inférieur à 0,4.

**2.** Éolienne selon la revendication 1, dans laquelle le ou les moyens de commande contrôlent les conditions de fonctionnement du rotor principal et du rotor secondaire en réglant le calage de la ou des pales du rotor principal et/ou le calage de la ou des pales du rotor secondaire.

**3.** Éolienne selon la revendication 1 ou la revendication 2, dans laquelle le rotor secondaire est relié au générateur sans aucun engrenage.

**4.** Éolienne selon l'une quelconque des revendications 1 à 2, dans laquelle le rotor secondaire est relié au générateur par l'intermédiaire d'un moyen de transmission.

**5.** Éolienne selon l'une quelconque des revendications précédentes, dans laquelle les moyens de commande comprennent un système informatique en communication de données avec des moyens permettant de déterminer les conditions de fonctionnement du rotor principal et du rotor secondaire et avec des moyens permettant de changer le calage de la ou des pales du rotor principal, le calage de la ou des pales du rotor secondaire et/ou la caractéristique de rotation du rotor secondaire.

**6.** Éolienne selon l'une quelconque des revendications précédentes, dans laquelle l'éolienne est une éolienne à rotor sous le vent.

**7.** Éolienne du type à rotor sous le vent, comprenant un rotor principal à deux pales montées sur un moyeu permettant la rotation du rotor principal, chaque pale du rotor principal ayant un rotor secondaire disposé à distance du moyeu et connecté à un générateur électrique, dans laquelle les pales du rotor principal et les pales du rotor secondaire sont non calables ou pratiquement non calables, l'éolienne comprenant en plus des moyens de commande permettant d'augmenter et de diminuer la vitesse de rotation des rotors secondaires afin d'obtenir un coefficient de poussée des rotors secondaires inférieur à 0,4.

**8.** Éolienne du type à rotor sous le vent selon la revendication 7, dans laquelle chacun des rotors secondaires est relié au générateur électrique sans aucun engrenage.

**9.** Éolienne du type à rotor sous le vent selon la revendication 7 ou la revendication 8, dans laquelle l'axe de rotation des rotors secondaires est fixe ou pratiquement fixe par rapport à l'axe de rotation du rotor principal.

**10.** Éolienne du type à rotor sous le vent selon l'une quelconque des revendications 7 à 9, dans laquelle les rotors secondaires sont situés au niveau des bords de fuite des pales.

**11.** Éolienne du type à rotor sous le vent selon l'une quelconque des revendications 7 à 10, dans laquelle l'éolienne est du type à régulation par décrochage aérodynamique.

**12.** Éolienne du type à rotor sous le vent selon l'une quelconque des revendications 7 à 11, comprenant en plus des moyens de contrôle pour

- diminuer la charge du générateur des rotors secondaires si la vitesse de rotation du rotor principal dépasse une limite prédéterminée,
- augmenter la charge du générateur des rotors secondaires si la vitesse de rotation du rotor principal passe en dessous d'une limite prédéterminée.

**13.** Éolienne du type à rotor sous le vent selon la revendication 12, dans laquelle la limite prédéterminée est calculée en fonction d'une limite de la vitesse à l'extrémité des pales du rotor principal, ladite limite étant égale à 200 m/s, par exemple égale à 150 m/s et de préférence égale à 100 m/s.

**14.** Éolienne du type à rotor sous le vent selon la revendication 12, dans laquelle la limite prédéterminée pour la vitesse de rotation du rotor principal est calculée en fonction d'un ratio de vitesse à l'extrémité défini comme le ratio de la vitesse à l'extrémité des rotors secondaires sur la vitesse à l'extrémité du rotor principal, ladite limite prédéterminée étant calculée de telle façon que le ratio de vitesse à l'extrémité soit inférieur à 3, de préférence inférieur à 2,75, par exemple inférieur à 2,5 et plus préférentiellement inférieur à 2,25.

**15.** Éolienne du type à rotor sous le vent selon l'une quelconque des revendications 7 à 14, dans laquelle les pales du rotor principal sont montées sur le moyeu au niveau de leurs bords d'attaque et de fuite.

**16.** Éolienne du type à rotor sous le vent selon l'une quelconque des revendications 7 à 15, dans laquelle les pales du rotor principal sont montées de manière flexible de façon à permettre une conicité des pales pendant le fonctionnement de l'éolienne.

**17.** Éolienne du type à rotor sous le vent selon la revendication 16, dans laquelle la flexibilité de montage est assurée par un accouplement flex-beam.

**18.** Éolienne du type à rotor sous le vent selon l'une quelconque des revendications 7 à 17, dans laquelle les pales du rotor principal sont montées sur le moyeu avec une pré-conicité dans le sens sous le vent.

**19.** Éolienne du type à rotor sous le vent selon l'une quelconque des revendications 7 à 18, dans laquelle le moyeu permet le balancement du rotor principal.

**20.** Éolienne du type à rotor sous le vent selon l'une quelconque des revendications 7 à 19, dans laquelle les deux pales sont formées d'un seul tenant dans une construction en aile.

**21.** Procédé de commande d'une éolienne selon l'une quelconque des revendications 1 à 6, ledit procédé comprenant

- la commande de l'angle de calage et/ou de la vitesse de la rotation de la ou des pales du rotor secondaire de façon à obtenir des conditions prédéfinies de fonctionnement de l'éolienne.

**22.** Procédé selon la revendication 21, dans lequel la commande du rotor principal comprend la commande de la charge sur le rotor secondaire de façon à obtenir un coefficient de puissance du rotor principal prédéterminé, ladite commande de la charge du rotor secondaire comprenant le réglage de la vitesse du rotor secondaire et/ou le réglage du calage des pales du rotor secondaire.

**23.** Procédé selon la revendication 21 ou la revendication 22, dans lequel le ralentissement du rotor principal se fait au moins en partie en augmentant la vitesse et/ou en réduisant l'angle de calage du rotor secondaire de façon à augmenter le coefficient de poussée du rotor secondaire.

Fig. 1

actuator disc
(rotor plane)

V

T

V(1-a)

V(1-2a)

Fig. 2

## ENERGY CONVERSION

Legend:
- CT
- power coefficient main rotor
- power coefficient secondary rotor

INDUCTION COEFFICIENT a

EP 1 390 615 B1

## Fig. 3

Fig. 4

ENERGY CONTENT AS A FUNCTION OF WIND SPEED

Fig. 5

RADIUS OF SECONDARY ROTOR (2 CPS) AS A FUNCTION OF TIP SPEED FOR 3MW TWO-BLADED TURBINE

Fig. 6

EP 1 390 615 B1

Fig. 7

Fig. 8

Fig. 9

EP 1 390 615 B1

Fig. 10

EP 1 390 615 B1

Fig. 11

Fig. 12

EP 1 390 615 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5151610 A
- DE 2737767
- GB 211766 A
- WO 9963218 A